# FASCICULE DE BREVET EUROPEEN

(11) **EP 0 702 138 B1**
(45) Date de publication et mention de la délivrance du brevet: **07.01.1999**
(21) Numéro de dépôt: 95401938.6
(22) Date de dépôt: 23.08.1995
(51) Int. Cl.: F02D 41/14, F02P 5/04

(54) **Procédé et dispositif de suppression des oscillations longitudinales d'un véhicule automobile à moteur**
Verfahren und Vorrichtung zur Unterdrückung von Ruckelschwingungen eines Kraftfahrzeugs
Method and device for the suppression of longitudinal oscillations of a motorised automotive vehicle

(30) Priorité: 14.09.1994 FR 9410981
(43) Date de publication de la demande: 20.03.1996
(73) Titulaire: AUTOMOBILES PEUGEOT, 75116 Paris (FR); AUTOMOBILES CITROEN, 92200 Neuilly-sur-Seine (FR)
(72) Inventeur: Pignard, Daniel, F-25200 Montbeliard (FR)
(74) Mandataire: Moncheny, Michel

(56) Documents cités:
- EP-A- 0 250 684
- EP-A- 0 295 651
- EP-A- 0 332 119
- EP-A- 0 651 158
- EP-A- 0 655 554
- DE-A- 3 831 575
- FR-A- 2 681 908
- GB-A- 2 042 772
- GB-A- 2 191 539
- US-A- 4 887 573
- US-A- 5 097 809
- PATENT ABSTRACTS OF JAPAN vol. 13 no. 485 (M-887) ,6 Novembre 1989 & JP-A-01 193063 (MAZDA MOTOR CORP) 3 Août 1989,
- PATENT ABSTRACTS OF JAPAN vol. 13 no. 485 (M-887) ,6 Novembre 1989 & JP-A-01 193065 (MAZDA MOTOR CORP) 3 Août 1989,
- DATABASE WPI Week 9534 Derwent Publications Ltd., London, GB; AN 95-259797 & JP-A-07 163 011 (HITACHI) , 23 Juin 1995

## Description

La présente invention concerne un procédé et un dispositif de suppression des oscillations longitudinales d'un véhicule automobile à moteur, par commande d'au moins un paramètre de contrôle du couple du moteur, en réponse à une demande d'accélération du véhicule par le conducteur.

Ces oscillations longitudinales prennent naissance notamment lors d'une variation de l'accélération du véhicule ou du couple moteur, d'une phase d'embrayage, ou encore du passage d'un obstacle sur une route.

On connaît déjà dans l'état de la technique des procédés et des dispositifs de ce type qui permettent d'effectuer des corrections et des réglages des paramètres de contrôle du fonctionnement d'un moteur, pour éliminer les oscillations, en surveillant un paramètre et en introduisant dans une boucle de commande de ce paramètre, une constante, à des instants déterminés en fonction de la détection des oscillations.

Cependant, ces procédés et ces dispositifs présentent un certain nombre d'inconvénients notamment au niveau de la détermination des instants d'application de la correction, dans la mesure où celle-ci n'intervient pas en permanence.

Il est également connu par le document FR-A-2 681 908, aux noms des Demanderesses, un procédé de correction des paramètres de contrôle d'un moteur à combustion interne qui consiste, à partir d'un modèle estimateur du couple moteur et d'un modèle pour chaque rapport de vitesse estimateur de la transmission, à élaborer une variable qui est une combinaison linéaire des dérivées première et seconde du régime moteur et représente les oscillations extraites du régime moteur, à appliquer une correction variable sur cette variable pour déterminer la variation du couple moteur et à partir de cette variation, à déterminer la correction à appliquer sur le ou les paramètres de contrôle du moteur.

Cependant, ce procédé présente un certain nombre d'inconvénients notamment au niveau de la complexité de la modélisation, du volume des calculs en temps réel nécessaires pour obtenir la correction et du fait que l'on agit très peu sur le début de l'oscillation.

De plus, la reconstitution du régime moteur moyen à partir du régime moteur instantané telle qu'existant dans le procédé décrit dans ce document s'avère très délicate à mettre en oeuvre dans la pratique.

On connaît également par la demande de brevet français n° 93 03 605 déposée le 29 mars 1993, aux noms des demanderesses (FR-A-2 703 404), un procédé de contrôle du fonctionnement d'un moteur à combustion interne d'un véhicule automobile, par commande d'au moins un paramètre P1 de contrôle du fonctionnement de ce moteur, qui consiste à élaborer un signal de régime moteur filtré NF représentatif d'oscillations du régime moteur N, et à asservir ce signal de régime moteur filtré à 0, pour amortir les oscillations du régime moteur, par calcul d'une correction à apporter au couple moteur et détermination de la correction correspondante CP à appliquer audit paramètre de contrôle du fonctionnement du moteur à l'aide d'un régulateur numérique dont les paramètres ont été préalablement calculés à partir d'un modèle estimateur du couple moteur dans lequel sont introduits les paramètres de contrôle du fonctionnement du moteur et d'un modèle estimateur de transmission filtré, pour chaque rapport de boîte de vitesses.

Ce procédé présente l'inconvénient d'être d'une mise en oeuvre difficile et délicate et de nécessiter des moyens de calcul importants.

Le but de l'invention est donc de proposer une solution simple à mettre en oeuvre pour résoudre les problèmes d'oscillations longitudinales mentionnés précédemment.

A cet effet, l'invention a pour objet un procédé de suppression des oscillations longitudinales d'un véhicule automobile à moteur, par commande d'au moins un paramètre de contrôle du couple du moteur, en réponse à une demande d'accélération du véhicule par le conducteur, caractérisé en ce qu'il comporte les étapes suivantes :
a) déterminer en fonction du temps des valeurs de dérivée d'un ordre prédéterminé par rapport au temps de la position angulaire de l'arbre du moteur,
b) déterminer une valeur optimum du couple moteur pour l'accélération demandée par le conducteur,
c) élaborer à partir d'une valeur déterminée à un instant donné de la dérivée de l'ordre prédéterminé par rapport au temps de la position angulaire de l'arbre du moteur une variable représentative de la composante ondulatoire de la valeur déterminée de la dérivée qui est égale à la valeur déterminée de la dérivée, minorée d'une valeur moyenne de la dérivée calculée en fonction d'un couple moteur probable,
d) calculer une valeur de correction de couple proportionnelle à cette variable et fonction des caractéristiques intrinséques du véhicule, à appliquer au couple moteur de valeur optimum,
e) calculer une valeur de couple corrigée à partir des valeurs de couple optimum et de correction,
f) calculer un paramètre corrigé de contrôle de couple du moteur correspondant à cette valeur de couple corrigée, et
g) piloter le moteur en fonction de ce paramètre corrigé avec un retard par rapport à l'instant d'élaboration de la variable inférieur ou égal à un sixième de la période des oscillations longitudinales à supprimer du véhicule.

Ce procédé peut éventuellement présenter certaines des caractéristiques avantageuses suivantes :
- l'étape a) consiste à déterminer en fonction du temps la valeur de la dérivée d'ordre un par rapport au temps de la position angulaire de l'arbre du moteur, c'est à dire le régime instantané du moteur, et l'instant donné de détermination de la valeur de la dérivée défini à l'étape c) est l'instant d'élaboration de la variable.
- l'étape a) consiste à déterminer en fonction du temps la valeur de la dérivée d'ordre deux par rapport au temps de la position angulaire de l'arbre du moteur, c'est à dire l'accélération instantanée de l'arbre du moteur et l'instant donné de détermination de la valeur de la dérivée défini à l'étape c) est en avance d'un quart de la période des oscillations longitudinales à supprimer du véhicule de l'instant d'élaboration de la variable.

L'invention a également pour objet un dispositif de suppression des oscillations longitudinales d'un véhicule automobile à moteur, par commande d'au moins un paramètre de contrôle du couple du moteur en réponse à une demande d'accélération du véhicule par le conducteur, caractérisé en ce qu'il comporte :
a) des moyens adaptés pour déterminer en fonction du temps des valeurs de dérivée d'un ordre prédéterminé par rapport au temps de la position angulaire de l'arbre du moteur,
b) des moyens adaptés pour déterminer une valeur optimum du couple moteur pour l'accélération demandée par le conducteur,
c) des moyens adaptés pour élaborer à partir d'une valeur déterminée à un instant donné de la dérivée de l'ordre prédéterminé par rapport au temps de la position angulaire de l'arbre du moteur une variable représentative de la composante ondulatoire de la valeur déterminée de la dérivée qui est égale à la valeur déterminée de la dérivée, minorée d'une valeur moyenne de la dérivée calculée en fonction d'un couple moteur probable,
d) des moyens adaptés pour calculer une valeur de correction de couple proportionnelle à cette variable et fonction des caractéristiques intrinséques du véhicule, à appliquer au couple moteur de valeur optimum,
e) des moyens adaptés pour calculer une valeur de couple corrigée à partir des valeurs de couple optimum et de correction,
f) des moyens adaptés pour calculer un paramètre corrigé de contrôle de couple du moteur correspondant à cette valeur de couple corrigée, et
g) des moyens adaptés pour piloter le moteur en fonction de ce paramètre corrigé avec un retard par rapport à l'instant d'élaboration de la variable inférieur ou égal à un sixième de la période des oscillations longitudinales à supprimer du véhicule.

La présente invention sera mieux comprise à la lumière de la description qui va suivre, donnée uniquement à titre d'exemple et se référant aux dessins annexés sur lesquels :
- la figure 1 représente un organigramme illustrant le fonctionnement du procédé selon l'invention ;
- la figure 2 représente un schéma synoptique illustrant la structure d'un dispositif pour la mise en oeuvre du procédé selon l'invention.

La mise en oeuvre du procédé suivant l'invention nécessite le contrôle du couple moteur délivré par le moteur du véhicule, par commande d'un ou de plusieurs paramètres de contrôle du moteur. Suivant le type de moteur utilisé, ces paramètres de contrôle pourront être, par exemple, l'avance à l'allumage pour les moteurs à explosion, la quantité de carburant admis pour les moteurs à combustion interne, ou encore l'intensité ou la tension d'alimentation pour les moteurs électriques de motorisation des véhicules dits à propulsion électrique.

Dans tous les cas, le ou les paramètres de contrôle sont choisis de telle sorte que le couple moteur soit contrôlé d'une manière quasi instantanée, c'est-à-dire par exemple à chaque demi-tour de vilebrequin pour les moteurs thermiques.

De plus, afin de contrôler les effets du pilotage du moteur, la valeur du couple moteur doit être déterminée périodiquement au cours du fonctionnement du véhicule.

Cette valeur du couple moteur pourra être mesurée ou calculée dans le cas d'un moteur thermique à partir d'un modèle estimateur du couple moteur et de données représentatives à chaque instant de valeurs de mesure de tout ou partie des paramètres suivants : position de la commande d'accélération du véhicule, régime moteur, pression dans les tubulures d'admission du moteur, avance à l'allumage, richesse du carburant, quantité de carburant admis, température d'air admis, etc... .

Dans le cas où le couple moteur est calculé à partir, entre autres, du régime moteur, ce dernier est déterminé par exemple toutes les 10 millisecondes ou tous les demi-tours de vilebrequin pour les moteurs thermiques.

Les paramètres de contrôle du couple moteur, les paramètres pris en compte dans la détermination du couple moteur ou les fréquences de mesure sont donnés ici à titre d'exemple mais ne limitent en aucun cas la portée de l'invention.

De même, la mise en oeuvre du procédé selon l'invention nécessite la connaissance en fonction du temps des valeurs d'une dérivée d'un ordre prédéterminé par rapport au temps de la position angulaire de l'arbre du moteur du véhicule.

Ainsi, des déterminations de ces valeurs de la dérivée d'un ordre prédéterminé par rapport au temps de la position angulaire de l'arbre du moteur doivent être effectuées périodiquement au cours de l'avancement du véhicule avec une fréquence comparable à la fréquence utilisée pour le contrôle du couple du moteur.

Ces déterminations peuvent résulter d'une mesure directe ou d'un calcul de dérivées successives effectué sur des mesures représentatives d'une dérivée d'un ordre inférieur à celle dont on souhaite déterminer la valeur de la position angulaire de l'arbre du moteur.

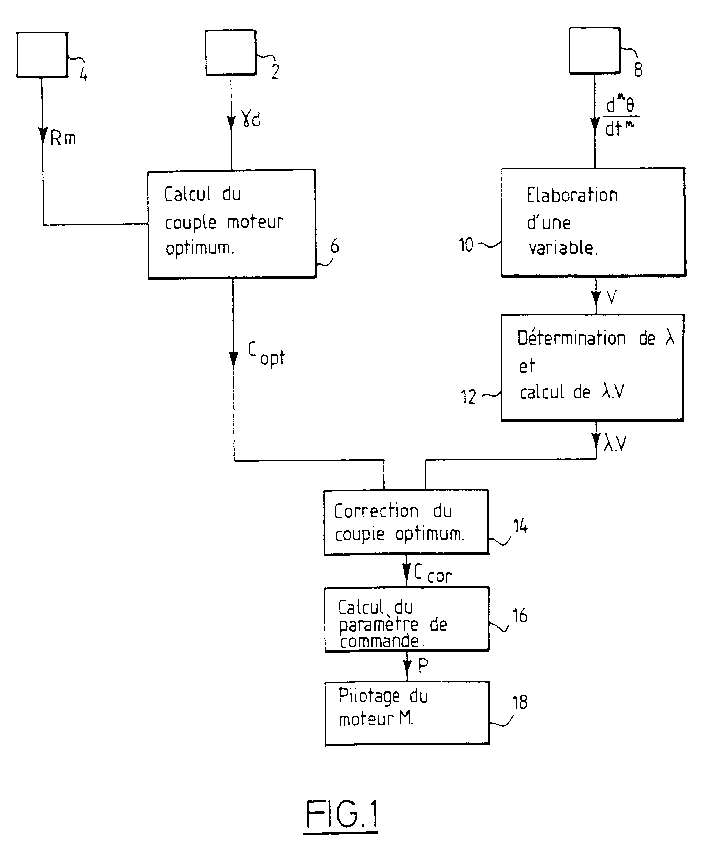

Sur la figure 1, on a représenté un organigramme illustrant le fonctionnement du procédé selon l'invention.

Ainsi, une valeur d'accélération demandée γ_{d} par le conducteur par l'intermédiaire de la pédale d'accélération du véhicule est mesurée à l'étape 2.

De même, une valeur du régime moteur notée Rₘ d'un moteur M est mesurée à l'étape 4 par l'intermédiaire d'un capteur approprié placé sur l'arbre du moteur M.

A partir des valeurs γ_{d} et Rₘ, on effectue à l'étape 6 le calcul d'un couple optimum du moteur noté Cₒₚₜ à partir d'un procédé classique de cartographie.

Parallèlement à cela, on mesure et on stocke à l'étape 8 les valeurs de la dérivée d'un ordre n prédéterminé par rapport au temps de la position angulaire de l'arbre du moteur en fonction du temps à l'aide d'un capteur fixé sur l'arbre du moteur par exemple.

Ces valeurs de la dérivée de l'ordre n prédéterminé par rapport au temps de la position angulaire θ de l'arbre du moteur sont notées dⁿθ/dtⁿ.

A partir de ces valeurs dⁿθ/dtⁿ, de la dérivée de l'ordre n prédéterminé par rapport au temps de la position angulaire θ de l'arbre du moteur, mesurées à une fréquence supérieure à la fréquence des oscillations à supprimer du véhicule, on élabore à l'étape 10 une variable V.

Selon un premier mode de mise en oeuvre du procédé selon l'invention, on mesure et on stocke à l'étape 8 en fonction du temps la valeur dθ/dt de la dérivée d'ordre un par rapport au temps de la position angulaire de l'arbre du moteur, c'est-à-dire le régime instantané du moteur.

Cette mesure peut être effectuée directement à partir d'un capteur adapté de type classique, ou peut être calculée à partir de la valeur mesurée par un capteur de position angulaire de l'arbre du moteur.

Selon ce premier mode de réalisation, la variable V calculée à l'instant de détermination du régime instantanée du moteur est égale à la valeur de la composante ondulatoire du régime instantané du moteur calculée en fonction du temps.

Cette variable V est égale à la différence entre la valeur du régime instantané du moteur et la valeur du régime moyen du moteur calculé comme si le moteur était attelé rigidement au véhicule sans jeu et sans élasticité en fonction d'un couple moteur probable.

La valeur du couple moteur probable utilisée pour le calcul de la variable V est égale à la valeur d'un couple corrigé noté C_{cor} élaborée lors du cycle précédent de mise en oeuvre de l'algorithme. Le calcul du couple corrigé C_{cor} sera détaillé dans la suite de la description.

Selon un second mode de mise en oeuvre du procédé selon l'invention, on mesure et on enregistre à l'étape 8, les valeurs de la dérivée d²θ/dt² d'ordre deux par rapport au temps de la position angulaire de l'arbre du moteur, c'est-à-dire l'accélération instantanée de l'arbre du moteur.

Dans ce cas, on détermine la valeur de l'accélération instantanée de l'arbre du moteur en calculant la dérivée d'ordre un du régime instantané du moteur ou la dérivée d'ordre deux de la position angulaire de l'arbre du moteur.

Le régime instantané du moteur ou la position angulaire de l'arbre du moteur sont dans cas mesurés grâce à des capteurs adaptés classiques.

Dans ce second mode de mise en oeuvre, la variable V calculée à l'étape 10 est égale à la valeur de la composante ondulatoire de l'accélération instantanée de l'arbre du moteur calculée à un instant précédant l'instant d'élaboration de la variable V et séparée de celui-ci par un quart de la période des oscillations longitudinales à supprimer du véhicule.

Cette variable V est égale à la différence entre la valeur de l'accélération instantanée de l'arbre du moteur mesurée à un instant précédent l'instant d'élaboration de la variable et séparé de celui-ci par un quart de période des oscillations longitudinales à supprimer du véhicule et la valeur de l'accélération moyenne de l'arbre du moteur calculée au même moment comme si le moteur était attelé rigidement au véhicule sans jeu et sans élasticité, en fonction d'un couple moteur probable.

La valeur du couple moteur probable utilisée pour le calcul de la variable V est égale, de manière générale, à la valeur du couple corrigé noté C_{cor} élaborée lors d'un cycle précédent de mise en oeuvre de l'algorithme. Le calcul du coupe corrigé C_{cor} sera détaillé dans la suite de la description.

Cependant, afin d'éviter les écueils de divergence de correction et l'absence de correction pendant le premier quart de période de correction, que provoquerait le calcul de la variable V à partir de la seule valeur du couple corrigé C_{cor} calculée un quart de période des oscillations longitudinales à supprimer du véhicule avant l'instant d'élaboration de la variable V, le couple moteur probable utilisé pour le calcul de la variable V est une moyenne pondérée de ladite valeur du couple corrigé C_{cor} calculée un quart de période des oscillations longitudinales à supprimer du véhicule avant l'instant d'élaboration de la variable et de la valeur du couple moteur réel au moment de l'élaboration de la variable estimée par exemple à partir de la valeur du couple optimum Cₒₚₜ calculée à l'étape 6.

A partir de cette variable V, on calcule à l'étape 12, à l'aide d'un coefficient de proportionnalité λ fonction des caractéristiques intrinsèques du véhicule, une valeur de correction du couple λ.V qui soit proportionnelle à la variable V.

Le coefficient de proportionnalité noté λ est calculé à partir des caractéristiques intrinsèques du véhicule considérées à l'instant de calcul.

En particulier, le coefficient λ peut être déterminé à partir de la pulsation propre des oscillations à supprimer du véhicule pour chaque rapport de vitesse, d'un coefficient d'amortissement dû aux pneumatiques, d'un coefficient caractéristique de la raideur de transmission pour chaque rapport de vitesse, de la masse de la caisse du véhicule, du moment d'inertie du couple du moteur, et des éléments tournants de la transmission, ainsi que du rapport entre la vitesse d'avancement du véhicule et la vitesse de rotation du moteur.

Ce dernier paramètre caractérise en fait le rapport de boîte de vitesses utilisé pour les véhicules munis d'une boîte de vitesses.

Les différents paramètres utilisés pour le calcul du coefficient de proportionnalite λ sont remis à jour périodiquement et en particulier chaque fois que les paramètres caractéristiques intrinsèques du véhicule changent ou sont susceptibles de changer, comme c'est le cas par exemple après un arrêt du véhicule.

On pourra également déterminer le coefficient λ expérimentallement en réalisant une succession d'essais, et en retenant pour λ la valeur ayant conduit au meilleur résultat.

A l'étape 14, on calcule à partir du couple optimum Cₒₚₜ et de la valeur de correction du couple λ.V une valeur corrigée du couple notée C_{cor} obtenue en effectuant la somme de la valeur du couple optimum Cₒₚₜ et de la valeur de correction λ.V.

A partir de ce couple corrigé C_{cor}, on calcule à l'étape 16 un paramètre corrigé de contrôle de couple du moteur, noté P à partir d'un modèle classique liant le paramètre de contrôle du couple d'un moteur et le couple délivré par ce moteur en réponse à l'application de ce paramètre.

On pilote enfin à l'étape 18 le moteur M en fonction du paramètre P calculé à l'étape précédente.

On veillera à ce que le pilotage soit effectué avec un retard par rapport à l'instant d'élaboration de la variable V qui est inférieur ou égal à un sixième de la période des oscillations longitudinales à supprimer du véhicule.

Afin de permettre de limiter de manière permanente les oscillations longitudinales du véhicule, le procédé tel que décrit peut être mis en oeuvre de manière cyclique pendant toute la durée de fonctionnement du véhicule.

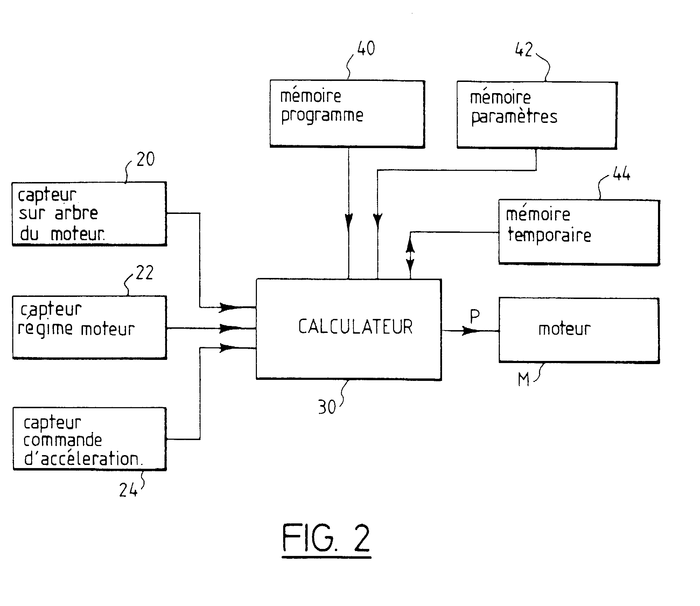

Sur la figure 2 est représenté de manière schématique un dispositif permettant de mettre en oeuvre le procédé selon l'invention.

Celui-ci comprend un ensemble de capteurs de type classique 20, 22, 24 reliés à un calculateur 30 capable de traiter les informations reçues des capteurs suivant des programmes stockés dans une mémoire 40 et en fonction de paramètres caractéristiques du véhicule stockés dans une mémoire 42.

Ce calculateur 30 a pour objet d'ajuster le ou les paramètres P de contrôle du moteur M et de stocker certains paramètres issus des capteurs dans une mémoire temporaire 44, en vue d'une réutilisation ultérieure de ceux-ci.

L'ensemble de capteurs comprend au moins un capteur 20 lié à l'arbre du moteur du véhicule, un capteur de régime moteur 22 et un capteur associé à la commande d'accélération 24 du véhicule pour mesurer la demande d'accélération du conducteur. Ce dernier capteur pourra, par exemple dans le cas des moteurs à explosion, être un capteur de pression de la tubulure d'admission du moteur.

Le capteur 20 pourra suivant différents modes de réalisation être un capteur de position angulaire de l'arbre du moteur, un capteur de régime instantané du moteur ou un capteur de l'accélération instantanée de l'arbre du moteur.

Suivant le type du capteur 20, les capteurs 20 et 22 pourront bien sûr être réunis dans un seul et même capteur.

Comme on l'a décrit précédemment, bien d'autres valeurs de mesure peuvent être avantageusement prises en compte dans la mise en oeuvre du procédé.

En particulier, des capteurs appropriés reliés au calculateur 30 devront être ajoutés dans le cas où le coefficient de proportionnalité λ utilisé pour le calcul de la correction à apporter au couple moteur dépend de paramètres du véhicule qui sont susceptibles d'évoluer en fonction du temps et ainsi permettre leur remise à jour dans la mémoire 42.

Dans la mémoire programme 40, sont stockés, en vue de leur utilisation par le calculateur 30, des algorithmes de calcul classique du couple optimum Cₒₚₜ en fonction de la demande d'accélération γ_{d} du conducteur, des algorithmes de calcul de la valeur de correction du couple λ.V à appliquer au couple optimum en fonction de la valeur de la dérivée dⁿθ/dtⁿ d'un ordre prédéterminé de la position angulaire de l'arbre du moteur au cours du temps, des algorithmes de calcul du couple corrigé C_{cor} à partir du couple optimum Cₒₚₜ et de la valeur de correction λ.V, des algorithmes de calcul des valeurs du ou des paramètres P de contrôle du moteur M en fonction des valeurs du couple corrigé C_{cor}, et des algorithmes de calcul du régime moyen du moteur ou de l'accélération moyenne de l'arbre du moteur comme si le moteur était attelé rigidement au véhicule sans jeu et sans élasticité en fonction du couple moteur probable.

De plus, dans le cas où le capteur 20 mesure des valeurs nécessitant une ou plusieurs dérivations, des algorithmes classiques de dérivation en fonction du temps, sont stockés dans la mémoire 40 afin d'être mis en oeuvre de manière appropriée par le calculateur 30.

Des données caractéristiques du véhicule, résultant ou non de mesures expérimentales, et utiles au calculateur pour la détermination des valeurs des paramètres de contrôle du moteur, sont stockées dans la mémoire 42.

Dans le cas où les caractéristiques intrinséques du véhicule stockés dans la mémoire 42 peuvent varier au cours du temps, le calculateur 30 modifie dans la mémoire 42 les valeurs des caractéristiques intrinséques ayant été réactualisées à partir de données issues de capteurs appropriés.

La mémoire temporaire 44 est utilisée par le calculateur 30 pour stocker des données reçues des capteurs qui sont utilisées à des instants ultérieurs au cours de la mise en oeuvre du procédé.

C'est le cas notamment, suivant le mode de mise en oeuvre utilisé, des valeurs de l'accélération instantanée de l'arbre du moteur, ou du régime instantané du moteur.

On conçoit alors que, en fonction de ces différentes informations, le calculateur commande au moins un paramètre P de contrôle du couple moteur pour supprimer les oscillations longitudinales du véhicule, résultant des demandes d'accélération du conducteur, selon les différents algorithmes de calcul décrits précédemment en mettant en oeuvre le procédé selon l'invention.

## Revendications

1. Procédé de suppression des oscillations longitudinales d'un véhicule automobile à moteur, par commande d'au moins un paramètre de contrôle du couple du moteur en réponse à une demande d'accélération du véhicule par le conducteur, comportant les étapes suivantes :
a) déterminer (en 8) en fonction du temps des valeurs de dérivée (dⁿθ/dtⁿ) d'un ordre (n) prédéterminé par rapport au temps de la position angulaire de l'arbre du moteur,
b) déterminer (en 6) une valeur optimum du couple moteur (Cₒₚₜ) pour l'accélération demandée (γ_{d}) par le conducteur,
c) élaborer (en 10) à partir d'une valeur déterminée à un instant donné de la dérivée (dⁿθ/dtⁿ) de l'ordre (n) prédéterminé par rapport au temps de la position angulaire (θ) de l'arbre du moteur une variable (V) représentative de la composante ondulatoire de la valeur déterminée de la dérivée (dⁿθ/dtⁿ) qui est égale à la valeur déterminée de la dérivée (dⁿθ/dtⁿ), minorée d'une valeur moyenne de la dérivée (dⁿθ/dtⁿ) calculée en fonction d'un couple moteur probable,
d) calculer (en 12) une valeur de correction de couple (λ.V) proportionnelle à cette variable (V) et fonction des caractéristiques intrinsèques du véhicule, à appliquer au couple moteur de valeur optimum (Cₒₚₜ),
e) calculer (en 14) une valeur de couple corrigée (C_{cor}) à partir des valeurs de couple optimum et de correction,
f) calculer (en 16) un paramètre (P) corrigé de contrôle de couple du moteur correspondant à cette valeur de couple corrigée (C_{cor}), et
g) piloter (en 18) le moteur en fonction de ce paramètre corrigé (P) avec un retard par rapport à l'instant d'élaboration de la variable (V) inférieur ou égal à un sixième de la période des oscillations longitudinales à supprimer du véhicule.

2. Procédé selon la revendication 1, caractérisé en ce que l'étape a) consiste à déterminer en fonction du temps la valeur de la dérivée (dθ/dt) d'ordre un par rapport au temps de la position angulaire de l'arbre du moteur, c'est à dire le régime instantané du moteur et en ce que l'instant donné de détermination de la valeur de la dérivée (dθ/dt) défini à l'étape c) est l'instant d'élaboration de la variable (V).

3. Procédé selon la revendication 1, caractérisé en ce que l'étape a) consiste à déterminer en fonction du temps la valeur de la dérivée (d²θ/dt²) d'ordre deux par rapport au temps de la position angulaire de l'arbre du moteur, c'est à dire l'accélération instantanée de l'arbre du moteur et en ce que l'instant donné de détermination de la valeur de la dérivée (d²θ/dt²) défini à l'étape c) est en avance d'un quart de la période des oscillations longitudinales à supprimer du véhicule de l'instant d'élaboration de la variable (V).

4. Dispositif de suppression des oscillations longitudinales d'un véhicule automobile à moteur, par commande d'au moins un paramètre de contrôle du couple du moteur, en réponse à une demande d'accélération du véhicule par le conducteur, comportant:
a) des moyens (20) adaptés pour déterminer en fonction du temps des valeurs de dérivée d'un ordre prédéterminé par rapport au temps de la position angulaire de l'arbre du moteur,
b) des moyens (30) adaptés pour déterminer une valeur optimum du couple moteur pour l'accélération demandée par le conducteur,
c) des moyens (30) adaptés pour élaborer à partir d'une valeur déterminée à un instant donné de la dérivée de l'ordre prédéterminé par rapport au temps de la position angulaire de l'arbre du moteur une variable représentative de la composante ondulatoire de la valeur déterminée de la dérivée qui est égale à la valeur déterminée de la dérivée, minorée d'une valeur moyenne de la dérivée calculée en fonction d'un couple moteur probable,
d) des moyens (30) adaptés pour calculer une valeur de correction de couple proportionnelle à cette variable et fonction des caractéristiques intrinsèques du véhicule, à appliquer au couple moteur de valeur optimum,
e) des moyens (30) adaptés pour calculer une valeur de couple corrigée à partir des valeurs de couple optimum et de correction,
f) des moyens (30) adaptés pour calculer un paramètre corrigé de contrôle de couple du moteur correspondant à cette valeur de couple corrigée, et
g) des moyens (30) adaptés pour piloter le moteur en fonction de ce paramètre corrigé avec un retard par rapport à l'instant d'élaboration de la variable inférieur ou égal à un sixième de la période des oscillations longitudinales à supprimer du véhicule.

## Patentansprüche

1. Verfahren für die Unterdrückung der Ruckelschwingungen eines Kraftfahrzeugs durch Regelung mindestens eines Parameters für die Kontrolle des Drehmoments des Motors als Reaktion auf eine vom Fahrer veranlaßte Beschleunigung des Fahrzeugs, welches folgende Arbeitsschritte aufweist
a) Ermittlung (am Punkt 8) in Abhängigkeit von der Zeit der Werte der Kurven (dⁿθ/dtⁿ) einer bestimmten Größenordnung (n) im Vergleich zu dem Zeitpunkt des Erreichens der Winkelposition der Antriebswelle des Motors;
b) Ermittlung (am Punkt 6) eines optimalen Wertes des Drehmoments des Motors (Cₒₚₜ) für die vom Fahrer veranlaßte Beschleunigung (γ_{d}) des Fahrzeugs;
c) Berechnung (am Punkt 10) auf der Grundlage eines ermittelten Wertes in einem bestimmten Zeitpunkt der Kurve (dⁿθ/dtⁿ) in der ermittelten Größenordnung (n) im Vergleich zum Zeitpunkt des Erreichens der Winkelposition der Antriebswelle des Motors einer Variablen (V), welche für die Wellenlinie des ermittelten Wertes der Kurve (dⁿθ/dtⁿ) repräsentativ ist und dem ermittelten Wert der Kurve (dⁿθ/dtⁿ) entspricht, verringert um einen mittleren Wert der Kurve (dⁿθ/dtⁿ), welcher aufgrund eines wahrscheinlichen Drehmoments des Motors berechnet wurde;
d) Berechnung (bei 12) eines Wertes für die Korrektur des Drehmoments (γ.V), welcher proportional zu dieser Variablen (V) verläuft und von den intrinsischen Eigenschaften des Fahrzeugs abhängt und auf das optimale Drehmoment (Cₒₚₜ) des Motors Wert beaufschlagt wird;
e) Berechnung (bei 14) eines korrigierten Wertes des Drehmoments (C_{cor}), auf der Grundlage der Werte des optimalen Drehmoments und der durchzuführenden Korrektur;
f) Berechnung (bei 16) eines korrigierten Parameters (P) für die Kontrolle des Drehmoments des Motors, welcher diesem korrigierten Wert des Drehmoments (C_{cor}) entspricht und
g) Steuerung (bei 18) des Motors entsprechend diesem korrigierten Parameter (P) mit einer gewissen Verzögerung im Vergleich zum Zeitpunkt der Ermittlung der Variablen (V), welche sich maximal auf eine Sechstelperiode der zu unterdrückenden Ruckelschwingungen des Fahrzeugs beläuft.

2. Verfahren nach Anspruch 1,
**dadurch gekennzeichnet, daß**
der Arbeitsschritt a) darin besteht, daß in Abhängigkeit von der Zeit der Wert der Kurve (dθ/dt) der Größenordnung eins im Vergleich zum Zeitpunkt des Erreichens der Winkelposition der Antriebswelle des Motors ermittelt wird, das heißt also, die momentane Drehzahl des Motors, und dadurch, daß der Zeitpunkt der Ermittlung des Wertes der Kurve (dθ/dt), welcher im Arbeitsschritt c) ermittelt wurde, der Zeitpunkt der Berechnung der Variablen (V) ist.

3. Verfahren nach Anspruch 1,
**dadurch gekennzeichnet, daß**
der Arbeitsschritt a) darin besteht, daß in Abhängigkeit von der Zeit der Wert der Kurve (d²θ/dt²) der Größenordnung zwei im Vergleich zum Zeitpunkt des Erreichens der Winkelposition der Antriebswelle des Motors ermittelt wird, das heißt also, die momentane Beschleunigung der Antriebswelle des Motors, und dadurch, daß der Zeitpunkt der Ermittlung des im Arbeitsschritt c) definierten Wertes der Kurve (d²θ/dt²) eine Voreilung einer Viertelperiode zu den zu unterdrückenden Ruckelschwingungen des Fahrzeugs im Vergleich zum Zeitpunkt der Ermittlung der Variablen (V) hat.

4. Vorrichtung für die Unterdrückung der Ruckelschwingungen eines motorisierten Kraftfahrzeugs durch Regelung mindestens eines Parameters für die Kontrolle des Drehmoments des Motors als Reaktion auf eine durch den Fahrer veranlaßte Beschleunigung des Fahrzeugs , welche folgendes aufweist
a) geeignete Mittel (20) für die Ermittlung in Abhängigkeit von der Zeit von Werten einer Kurve einer bestimmten Größenordnung im Vergleich zum Zeitpunkt des Erreichens der Winkelposition der Antriebswelle des Motors;
b) geeignete Mittel (30) für die Ermittlung eines optimalen Wertes des Drehmoments für die vom Fahrer veranlaßte Beschleunigung des Fahrzeugs;
c) geeignete Mittel (30), um auf der Grundlage eines bestimmten Wertes zu einem gewissen Zeitpunkt der Erreichung der Kurve der ermittelten Größenordnung im Vergleich zum Zeitpunkt des Erreichens der Winkelposition der Antriebswelle des Motors eine Variable zu ermitteln, welche für die Wellenlinie des errechneten Wertes der Kurve repräsentativ und gleich dem berechneten Wert der Kurve ist, verringert um einen mittleren Wert der Kurve, welche je nach einem wahrscheinlichen Drehmoment des Motors berechnet wurde;
d) geeignete Mittel (30), um einen Korrekturwert des Drehmoments zu berechnen, welcher proportional zu dieser Variablen verläuft und von den intrinsischen Werten des Fahrzeugs abhängt und auf das optimale Drehmoment des Motors beaufschlagt wird;
e) geeignete Mittel (30), um einen korrigierten Wert des Drehmoments auf der Grundlage des optimalen Drehmoments und des zu korrigierenden Drehmoments zu berechnen;
f) geeignete Mittel (30), um einen korrigierten Parameter für die Kontrolle des Drehmoments des Motors zu berechnen, welcher diesem korrigierten Wert des Drehmoments entspricht; und
g) geeignete Mittel (30), um den Motor entsprechend diesem korrigierten Parameter mit einer Verzögerung im Vergleich zum Zeitpunkt der Ermittlung der Variablen zu steuern, welche mindestens einer Sechstelperiode der zu unterdrückenden Ruckelschwingungen des Fahrzeugs entspricht.

## Claims

1. Method of suppressing longitudinal vibrations in a motor-driven automobile, by means of controlling at least one monitoring parameter of the engine couple in response to a demand for acceleration of the vehicle by the driver, comprising the following stages:
a) determining (at 8) as a function of time, derivative values (dⁿθ/dtⁿ) of an order (n) predetermined with respect to the time of the angular position of the engine shaft,
b) determining (at 6) an optimum value of the engine couple (Cₒₚₜ) for the acceleration demanded (γ_{d}) by the driver,
c) working out (at 10) from a value determined at a given instance of the derivative (dⁿθ/dtⁿ) of the order (n) predetermined with relation to the time of the angular position (θ) of the shaft of the engine, a variable (V) representing the undulating component of the determined value of the derivative (dⁿθ/dtⁿ) which is equal to the determined value of the derivative (dⁿθ/dtⁿ), reduced by an average value of the derivative (dⁿθ/dtⁿ) calculated as a function of a probable engine couple,
d) calculating (at 12) a couple (λ.V) correction value proportional to this variable (V) and a function of the intrinsic characteristics of the vehicle, to be applied to the optimum value (Cₒₚₜ) of the engine couple,
e) calculating (at 14) a corrected couple value (C_{cor}) from optimum and correction couple values,
f) calculating (at 16) a corrected couple monitoring parameter (V) of the engine corresponding to this corrected couple value (C_{cor}), and
g) driving (at 18) the engine as a function of this corrected parameter (P) with a delay relative to the instant of working out the variable (V) lower than or equal to one-sixth of the period of the longitudinal vibrations of the vehicle to be suppressed.

2. Method according to claim 1, characterised in that stage a) consists in determining as a function of time the value of the derivative (dθ/dt) of the order 1 with respect to the time of the angular position of the shaft of the engine, i.e. the speed of the engine at any moment, and in that the given instant of determining the value of the derivative (dθ/dt) defined in stage (c) is the instant of working out the variable (V).

3. Method according to claim 1, characterised in that stage a) consists in determining as a function of time the value of the derivative (d²θ/dt²) of the order two with respect to the time of the angular position of the shaft of the engine, i.e. the acceleration at any moment of the shaft of the engine, and in that the given instant of determining the value of the derivative (d²θ/dt²) defined in stage c) is in advance by a quarter of the period of the longitudinal vibrations to be suppressed in the vehicle of the instant of working out the variable (V).

4. Device for suppressing longitudinal vibrations in a motor-driven automobile, by control of at least one monitoring parameter of the engine couple, in response to a demand for acceleration of the vehicle by the driver, comprising
a) means (20) adapted for determining as a function of time derivative values of a predetermined order with respect to the time of the angular position of the engine shaft,
b) means (30) adapted to determine an optimum value of the engine couple for the acceleration demanded by the driver,
c) means (30) adapted for working out from a determined value at a given instant of the derivative of the predetermined order with respect to the time of the angular position of the engine shaft, a variable representing the undulating component of the determined value of the derivative which is equal to the determined value of the derivative, reduced by an average value of the derivative calculated as a function of a probable engine couple,
d) means (30) adapted to calculate a correction couple value proportional to this variable as a function of the intrinsic characteristics of the vehicle, to be applied to the optimum-value engine couple,
e) means (30) adapted to calculate a corrected engine couple from optimum and correction couple values,
f) means (30) adapted to calculate a corrected couple monitoring parameter of the engine corresponding to this corrected couple value, and
g) means (30) adapted for driving the engine as a function of this corrected parameter with a delay with respect to the instant of working out the lower variable or equal to one-sixth of the period of the longitudinal vibrations to be suppressed in the vehicle.
